# EUROPEAN PATENT SPECIFICATION

(11) **EP 3 984 632 B1**
(45) Date of publication and mention of the grant of the patent: **07.10.2026**
(21) Application number: 19939346.3
(22) Date of filing: 01.08.2019
(51) Int. Cl.: B01J 20/04, B01D 53/50, B01J 20/30, C04B 7/36, C04B 7/60, B01J 20/28

(54) **METHOD AND APPARATUS FOR PRODUCING DESULFURIZING AGENT, AND METHOD FOR REMOVING SULFUR DIOXIDE FROM CEMENT KILN EXHAUST GAS**
VERFAHREN UND VORRICHTUNG ZUR HERSTELLUNG EINES ENTSCHWEFELUNGSMITTELS UND VERFAHREN ZUR ENTFERNUNG VON SCHWEFELDIOXID AUS EINEM ZEMENTOFENABGAS
PROCÉDÉ ET APPAREIL DE PRODUCTION D'UN AGENT DE DÉSULFURATION, ET PROCÉDÉ D'ÉLIMINATION DE DIOXYDE DE SOUFRE À PARTIR DE GAZ D'ÉCHAPPEMENT DE FOUR À CIMENT

(43) Date of publication of application: 20.04.2022
(73) Proprietor: Taiheiyo Engineering Corporation, Tokyo 135-0042 (JP)
(72) Inventor: YAMAMOTO Yasushi, Tokyo 135-0042 (JP)
(74) Representative: Isarpatent
(86) International application number: PCT/JP2019/030140
(87) International publication number: WO 2021/019754

(56) References cited:
- CN-A- 110 052 152
- JP-A- 2002 336 646
- JP-A- 2003 502 143
- JP-A- 2009 298 677
- JP-A- 2015 067 497
- JP-A- H11 513 654
- JP-A- S63 123 843
- US-A- 4 634 583
- US-A1- 2002 071 801
- US-A1- 2017 354 914

## Description

### TECHNICAL FIELD

The present invention relates to a method and an apparatus for producing a desulfurizing agent from a cement raw material, and a method for desulfurizing cement kiln exhaust gas using the produced desulfurizing agent.

### BACKGROUND ART

SOx generated by the combustion of fossil fuel containing sulfur (S) reacts with calcium (Ca) contained in cement raw material and is fixed in clinker as a clinker mineral, so that SOx concentrations in a preheater exhaust gas and an exhaust gas from a chimney are extremely low.

In order to further reduce the amount of SOx emitted from the gas discharged from the chimney, calcium oxide (CaO) in cement raw material is slaked and used as a desulfurizing agent. At this time, there is a method of making the cement raw material into a slurry and spraying it to the cement kiln exhaust gas, but there is a problem that a spray nozzle is clogged and so on.

There is also a method of adjusting water content of the cement raw material so that the cement raw material as a desulfurizing agent becomes powdery, but it is not easy to adjust the water content. In addition, there are problems that the slaking ratio of CaO changes and handleability deteriorates when the powder is formed.
US 2017/354914 A1 discloses methods and an apparatus for reducing the content of controlled acidic pollutants in clinker kiln emissions. The methods and the apparatus include introducing bypass dust produced during production of clinker into one or more locations between the preheater exhaust and the inlet to a dust filter including into a gas conditioning tower. Total bypass dust separated from the kiln exhaust gas may be used. The bypass dust can be separated into fine and coarse portions. Fine or total bypass dust can be mixed with water to form a bypass dust slurry that can be introduced into the gas conditioning tower. Bypass dust can be used to reduce the content of acidic pollutants such as hydrogen chloride HCl and sulfur oxides SOx from clinker kiln emissions.

### OUTLINE OF THE INVENTION

### PROBLEMS TO BE SOLVED BY THE INVENTION

The present invention has been made in view of the above-mentioned problems in the prior art, and the object of the present invention is to provide a method and an apparatus for producing a desulfurizing agent in which good handleability is achieved; the water content is easily adjusted; and the change of the slaking ratio of CaO can be kept small, as well as a method for desulfurizing cement kiln exhaust gas.

### MEANS OF SOLVING THE PROBLEMS

In order to attain the above object, a method for producing a desulfurizing agent of the present invention is characterized by including the steps of: drawing a cement raw material discharged from a lowermost cyclone of a preheater of a cement burning device or a preheated raw material discharged from a preheater cyclone of a cement burning device having a calcium oxide (CaO) content of 40% by mass or more; dividing the drawn cement raw material or preheated raw material into two; adding water to one of the divided cement raw materials or preheated raw materials to cool it and simultaneously make it into a slurry to promote slaking; and mixing the slurry with another of the divided cement raw materials or preheated raw materials to promote slaking of calcium oxide in the cement raw material or the preheated raw material in a steam atmosphere formed by the evaporation of water, and drying the slaked cement raw material or preheated raw material. Further, after making slurry and storing it in a tank, slurry with constant water content can be quantitatively discharged.

With the present invention, only adding water to one of the divided cement raw materials or the like to cool it and simultaneously make it into a slurry and mixing the slurry with another of the divided cement raw materials or the like allows the water content to be easily adjusted; the fluctuation of slaking ratio of CaO at powdering to be small; and a powdery desulfurizing agent with good handleability to be produced.

In the above method for producing the desulfurizing agent, adjusting the water content of the slurry to be 35% by mass or less allows the amount of cement raw material mixed in the slurry to be minimized, and heat loss to be minimized.

In addition, adjusting the water content of the dried cement raw material or preheated raw material to 10% by mass or less may maintain good handleability.

Further, a method for desulfurizing cement kiln exhaust gas of the present invention is characterized by including the step of simultaneously feeding the steam and slaked cement raw material or preheated raw material obtained by the above method for producing desulfurizing agent into an outlet of a preheater of a cement burning device or an inlet of a dust collector for removing dust from an exhaust gas of the preheater. With this, the produced desulfurizing agent as it is can be used for desulfurizing cement kiln exhaust gas.

Still further, it is possible to store the slaked cement raw material or the preheated raw material obtained by the above method for producing desulfurizing agent, and quantitatively feed the slaked cement raw material or the preheated raw material into an outlet of a preheater of a cement burning device or an inlet of a dust collector for removing dust from an exhaust gas of the preheater.

Adjusting an amount of the drawn cement raw material or preheated raw material such that the molar ratio of (CaO of the drawn cement raw material or preheating raw material)/(SO₂ of the preheater exhaust gas) is 2 or more and 100 or less allows the optimum amount of material according to SO₂ concentration of cement kiln exhaust gas to be drawn and heat loss to be minimized considering economic efficiency.

It is also possible to adjust an amount of the drawn cement raw material or preheated raw material according to the SOx concentration in the preheater exhaust gas to minimize heat loss.

In addition, an apparatus for producing desulfurizing agent of the present invention is characterized by including: a drawing device for drawing a cement raw material discharged from a lowermost cyclone of a preheater of a cement burning device or a preheated raw material discharged from a preheater cyclone of a cement burning device having a calcium oxide (CaO) content of 40% by mass or more; dividing means for dividing the drawn cement raw material or preheated raw material into two; a dissolving tank for adding water to one of the divided cement raw materials or preheated raw materials to cool it and simultaneously make it into a slurry; and a mixing dryer for mixing the slurry with another of the divided cement raw materials or preheated raw materials to promote slaking of calcium oxide in the cement raw material or the preheated raw material in a steam atmosphere formed by the evaporation of water, and drying the slaked cement raw material or preheated raw material.

With the present invention, only adjusting the outlet temperature of the mixing dryer allows the water content to be easily adjusted; the fluctuation of the slaking ratio of CaO at powdering to be small; and a powdery desulfurizing agent with good handleability to be produced.

Setting the outlet temperature of the mixing dryer to be 105°C or more enables the water content of the dried material to be less than 10 % by mass and enables obtaining a desulfurizing agent with good handleability and preferable dispersibility in gas.

### EFFECTS OF THE INVENTION

As described above, with the present invention, it is possible to provide a method and an apparatus for producing a desulfurizing agent in which good handleability is achieved; the water content is easily adjusted; and the change of the slaking ratio of CaO can be kept small, as well as a method for desulfurizing cement kiln exhaust gas.

### BRIEF DESCRIPTION OF THE DRAWINGS

[Figure 1] An overall block diagram showing a desulfurization agent manufacturing apparatus according to an embodiment of the present invention.
[Figure 2] An overall block diagram showing an apparatus for testing the desulfurization performance of a desulfurization agent according to the present invention.
[Figure 3] A graph showing the desulfurization performance test result of the desulfurization agent according to the present invention.

### MODE FOR CARRYING OUT THE INVENTION

Next, an embodiment of the present invention will be explained with reference to the drawings in detail.

Figure 1 shows a desulfurizing agent manufacturing apparatus according to an embodiment of the present invention, and the desulfurizing agent manufacturing apparatus 1 is attached to a cement burning device 11.

The cement burning device 11 includes a preheater 12, a calciner 13, a cement kiln 14, a clinker cooler 15, and others. A cement raw material R1 charged into the preheater 12 from a raw material supply system is preheated in the preheater 12, calcined in the calciner 13, and burned in the cement kiln 14 to produce clinker, then the clinker produced is cooled in the clinker cooler 15.

The preheater 12 is composed of four stages of cyclones 12A to 12D. The cement raw material R1 charged into an inlet duct of the uppermost cyclone 12A is preheated in the cyclones 12B and 12C, and a preheated raw material R4 discharged from the cyclone 12C is calcined in the calciner 13, then supplied to the cement kiln 14 via the lowermost cyclone 12D.

On the other hand, an exhaust gas G1 from the preheater 12 passes through an exhaust fan, a raw material grinding device, and others, and dust contained in the exhaust gas G1 is removed by a dust collector 17 such as an electrostatic precipitator and a bag filter, and is finally discharged from a chimney 18 to the atmosphere.

The desulfurization agent manufacturing apparatus 1 includes a drawing device 2 that draws a cement raw material R5 discharged from the lowermost cyclone 12D of the preheater 12 of the cement burning device 11; a dividing means 3 that divides a drawn cement raw material R7 into two; a dissolving tank for adding water W to one R8 of the divided cement raw materials to cool it and simultaneously make it into a slurry; and a mixing dryer 5 for mixing a slurry S with the other R9 of the divided cement raw materials to promote slaking of CaO in the cement raw material in a steam atmosphere formed by the evaporation of water, and drying the slaked cement raw material.

The structure of the drawing device 2 is not limited as long as the part R7 of the cement raw material R5 discharged from the lowermost cyclone 12D of the preheater 12 can be drawn, and a device with a damper and an overflow type transporter can be used.

Further, as long as the cement raw material R7 drawn with the drawing device 2 can be divided into two, the structure of the dividing means 3 is not limited, and a damper, a transporter, or the like can be used.

As the dissolution tank 4, one using a stirring blade that rotates so that the divided cement raw material R8 and water W can be efficiently mixed and stirred can be used, and the dissolution tank 4, to the lower part, is equipped with a transporter for transporting the slurry S. Further, after the slurry is formed, a storage tank may be provided to quantitatively extract the slurry with a constant water content.

As the mixing dryer 5, a pug mill or the like can be used. In the pug mill two shafts with a large number of fan-shaped blades mounted in a horizontal container are rotated in opposite directions, and the slurry S from the dissolution tank 4 and the cement raw material R9 are mixed and transported. When the pug mill is used, it is preferable to use a hood on the upper part of the pug mill to relieve the pressure generated when water vapor evaporates so that the inside of the pug mill does not become a positive pressure.

Next, the desulfurization agent production method and the cement kiln exhaust gas desulfurization method according to the present invention using the desulfurization agent production apparatus 1 will be described with reference to Fig. 1.

During the operation of the cement burning device 11, the cement raw material R5 discharged from the lowermost cyclone 12D is drawn with the drawing device 2. The cement raw material R6 that has not been drawn is directly fed into the cement kiln 14. The amount of the cement raw material R5 drawn by the drawing device 2 is adjusted so that the molar ratio of (CaO of the cement raw material R5)/(SO₂ of the preheater exhaust gas G1) is 2 or more and 100 or less. Further, the amount of the cement raw material R5 drawn may be adjusted according to the SOx concentration of the preheater exhaust gas G1 measured with a gas analyzer.

The cement raw material R7 drawn with the drawing device 2 is divided into two with the dividing means 3, one cement raw material R8 is fed into the dissolution tank 4, water W is added to the cement raw material R8 to cool it, and at the same time, it is slurried. At this time, hydration reaction of CaO is surely promoted under excess water in the dissolution tank 4. The water content of the slurry S in the dissolution tank 4 is adjusted to 35% by mass or less.

Next, the slurry S discharged from the dissolution tank 4 and the other cement raw material R9 divided in two with the dividing means 3 are fed into the mixing dryer 5; the two are transported while being mixed; the outlet temperature of the mixing dryer 5 is set to 105° C or higher; and the excess water added to the dissolution tank 4 is mixed and dried to 105 ° C or higher using the heat possessed by the cement raw material R9 to form a powder. Further, in the mixing dryer 5, the cement raw materials R8 and R9 are accompanied by the evaporated water to promote slaking of CaO in the cement raw materials R8 and R9, and the water content of the slaked cement raw material becomes 10% by mass or less to obtain a desulfurizing agent D.

The desulfurizing agent D obtained as described above can be added to an exhaust gas duct 16 up to the inlet of the dust collector 17 of the cement burning device 11 to desulfurize G1. Further, the desulfurizing agent D may be temporarily stored and then quantitatively charged into the exhaust gas duct 16 at the outlet of the preheater 12 or the inlet of the dust collector 17 according to the SOx concentration in G1.

With the present invention, since the powdery desulfurizing agent D is used, handleability is good, and water content can be easily adjusted only by controlling the outlet temperature of the mixing dryer 5, and fluctuations in the slaking ratio of CaO at powdering can be suppressed to a small extent.

In the above embodiment, the desulfurizing agent D is produced using the cement raw material R5 discharged from the lowermost cyclone 12D, but preheated raw material with a CaO content of 40% by mass or more discharged from a cyclone of the preheater 12 can also be used.

Next, a test example of the present invention will be described.

### (1) Manufacture of desulfurizing agent

40 g of bottom raw material preheated to 850 °C (corresponding to the cement raw material R7 drawn) was dissolved in 185 g of water to form a slurry, and then 160 g of bottom raw material preheated to 850 °C was added and mixed and dried at 105 °C. This sample was measured for contents of calcium hydroxide and calcium carbonate under the following conditions with a differential thermogravimetric simultaneous measuring device TG/DTA6300 manufactured by Seiko Instruments Inc.
Temperature range: room temperature to 1000 °C,
Temperature rising rate: 10 °C/min
Atmosphere: Nitrogen atmosphere
Reference sample: Aluminum oxide

In this sample, mass reduction accompanied by an endothermic peak was confirmed in the vicinity of 450 °C and in the range of 600 to 700 °C. It is considered that those around 450 °C are derived from dehydration of calcium hydroxide and those at 600 to 700 °C are derived from decarboxylation of calcium carbonate, and contents of calcium hydroxide and calcium carbonate are calculated from the reduction rate. As a result, calcium hydroxide content was 35.32% and calcium carbonate content was 3.23%. From this, it can be seen that the desulfurizing agent can be produced with the mixing dryer 5.

### (2) Desulfurization performance

### (a) Test procedure

A bottom raw material was preheated to 850 °C in an electric furnace in the same manner as an actual device, and it is mixed with a slurry bottom raw material to obtain a dried product. The dried product was reacted with a SOx gas in a tubular electric furnace to evaluate desulfurization performance. Since it is possible that the above-mentioned drying is not sufficient, the bottom raw material was slaked without preheating, and the same test was carried out using the raw material pre-dried in an electric furnace.

### (b) Test equipment and method

As raw materials, a bottom raw material was slurried and dried at 105 °C in an electric furnace (raw material 1); 40 g of a bottom raw material preheated to 850 °C was dissolved in 185 g of water to form a slurry, and then 160 g of another bottom raw material preheated to 850 °C was added and mixed and dried at 105 °C (raw material 2); and a cement raw material was heated at 900 °C in an electric furnace and was slurried, and then dried at 105 °C in an electric furnace (raw material 3) were prepared. The raw material 3 is used to eliminate the influence of weathering of the raw material.

As shown in Fig. 2, a tubular electric furnace 21 was filled with the above raw materials, and the tubular electric furnace 21 was sandwiched between glass wool 22, and a standard gas G1 with an SOx concentration of 836 ppm was heated to 120 °C via a pressure reducing valve 23 and a flow meter 24. The SOx concentration of the gas G2 discharged from the tubular electric furnace 21 was measured with a SOx gas analyzer 26 in the subsequent stage of a fan 25. A desulfurized gas G2 was treated in a neutralization tank 27.

### (c) Test levels and test results

The test levels were based on a total of 6 levels of 2 raw materials (raw materials 1 and 2) x Ca/S = 10, 20, and 30, and when the raw material 3 was used, a test in which Ca/S ratio was further increased was added. In addition, since the layer thickness of the test sample was thin, it was considered that it did not sufficiently react with SOx. Therefore, as a comparison, a test, in which the amount of the sample was increased and the amount of SOx gas was increased, was conducted (level 9). The test levels performed are shown in Table 1, and analysis data are shown in Table 2 and Fig. 3 (change over time in SOx concentration for each level).

**[Table 1]**

| | RAW MATERIAL | DESULFURIZATlON AGENT/SULFUR RATIO | SO₂ GAS | | TUBELAR FURNANCE INNER TEMPERATURE (°C) | GLASS WOOL | | SAMPLE AMOUNT (g) | HEATING START TIME | SO₂ SUPPLY START TIME | TEST TIME (min) | RECOVERY AMOUNT (g) |
|---|---|---|---|---|---|---|---|---|---|---|---|---|
| | | | CONCENTRATION | FLOW RATE | | LOWER LAYER | UPPER LAYER | | | | | |
| LEVEL 1 | RAW MATERIAL 1: Bottom raw material was slurried and dried at 105 ° C | Ca/S=10 | 836ppm | 3L/min | 120 | 1.0 | 0.5 | 1.65 | 9:17:00 | 9:40:30 | 12 | 1.58 |
| LEVEL 2 | | Ca/S=20 | 836ppm | 3L/min | 120 | 1.0 | 0.5 | 3.30 | 10:18:00 | 10:36:30 | 12 | 3.19 |
| LEVEL 3 | | Ca/S=30 | 836ppm | 3L/min | 120 | 1.0 | 0.5 | 4.96 | 11:09:00 | 11:43:40 | 12 | 4.75 |
| LEVEL 4 | RAW MATERIAL 2: Bottom raw material heated to 850 ° C was slurried (dried at 105 ° C) | Ca/S:10 | 836ppm | 3L/min | 120 | 1.0 | 0.5 | 1.65 | 13:40:00 | 13:58:40 | 12 | 1.57 |
| LEVEL 5 | | Ca/S=20 | 836ppm | 3L/min | 120 | 1.0 | 0.5 | 3.30 | 14:28:00 | 14:44:50 | 12 | 3.18 |
| LEVEL 6 | | Ca/S=30 | 836ppm | 3L/min | 120 | 1.0 | 0.5 | 4.96 | 15:11:00 | 15:31:30 | 12 | 4.87 |
| LEVEL 7 | | Ca/S=100 | 836ppm | 3L/min | 120 | 1.0 | 0.5 | 16.5 | 15:55:00 | 16:20:40 | (30) | 16 32 |
| LEVEL 8 | | Ca/S=50 | 836ppm | 3L/min | 120 | 1.0 | 0.5 | 8.25 | 8:50:00 | 9:05:30 | 12 | 8.11 |
| LEVEL 9 | | *Ca/S:30 | 836ppm | (5L/min) | 120 | 1.0 | 0.5 | 8.25 | 9:36:00 | 9:58:00 | 12 | 8.12 |
| LEVEL 10 | RAW MATERIAL 3: Cement raw material was heated at 900 ° C and was slurried (dried at 105 ° C) | Ca/S=50 | 836ppm | 3L/min | 120 | 1.0 | 0.5 | 8.25 | 10:36:00 | 10:48:40 | 12 | 8.25 |
| LEVEL 11 | BLANK | - | 836ppm | 3L/min | 120 | 1.0 | 0.5 | - | 11:06:00 | 11:14:30 | 12 | - |
| | *Gas flow rate was increased so that Ca/S:30, and the effect of layer thickness was investigated. | | | | | | | | | | | |

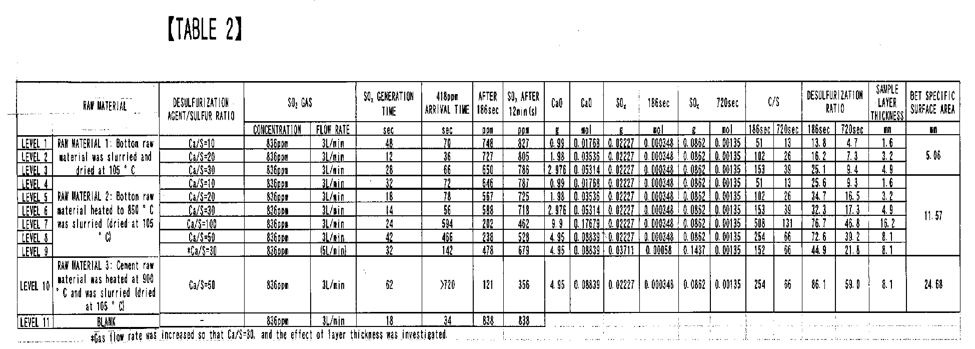

According to Fig. 3, a desulfurization effect is confirmed at all levels. However, the desulfurization effect is remarkable when Ca/S> 50. Further, according to Table 2, the raw material 1 has a BET specific surface area of 5.06 m²/g, the raw material 2 has a BET specific surface area of 11.57 m²/g, and the raw material 3 has a BET specific surface area of 24.68 m²/g. As can be seen from Fig. 3, a sample having a large BET specific surface area has good reactivity. In addition, desulfurization efficiency is improved 1.3-1.4 times by increasing the layer thickness of the sample from the comparison between level 6 and level 9.

### DESCRIPTION OF THE REFERENCE NUMERALS

1 desulfurizing agent manufacturing apparatus
2 drawing device
3 dividing means
4 dissolution tank
5 mixing dryer
11 cement burning device
12 preheater
12A-12D cyclones
13 calciner
14 cement kiln
15 clinker cooler
16 exhaust gas duct
17 dust collector
18 chimney
21 tubular electric furnace
22 glass wool
23 pressure reducing valve
24 flow meter
25 fan
26 SOx gas analyzer
27 neutralization tank

## Claims

1. A method for producing a desulfurizing agent comprising the steps of:
drawing a cement raw material (R5) discharged from a lowermost cyclone (12D) of a preheater (12) of a cement burning device (11) or a preheated raw material discharged from a preheater cyclone of a cement burning device (11) having a calcium oxide (CaO) content of 40% by mass or more;
dividing said drawn cement raw material (R7) or preheated raw material into two;
adding water (W) to one (R8) of said divided cement raw materials or preheated raw materials to cool it and simultaneously make it into a slurry (S); and
mixing said slurry (5) with another of the divided cement raw materials (R9) or preheated raw materials to promote slaking of calcium oxide in the cement raw material or the preheated raw material in a steam atmosphere formed by the evaporation of water, and drying the slaked cement raw material or preheated raw material.

2. The method for producing the desulfurizing agent as claimed in claim 1, wherein the water content of said slurry is adjusted to 35% by mass or less.

3. The method for producing the desulfurizing agent as claimed in claim 1 or 2, wherein the water content of said dried cement raw material or preheated raw material is adjusted to 10% by mass or less.

4. A method for desulfurizing cement kiln exhaust gas comprising the step of simultaneously feeding said steam and slaked cement raw material or preheated raw material obtained by the method for producing desulfurizing agent as claimed in claim 1, 2 or 3 into an outlet of a preheater (12) of a cement burning device (11) or an inlet of a dust collector (17) for removing dust from an exhaust gas of the preheater (12).

5. A method for desulfurizing cement kiln exhaust gas comprising the steps of storing said slaked cement raw material or preheated raw material obtained by the method for producing desulfurizing agent as claimed in claim 1, 2 or 3, and quantitatively feeding the slaked cement raw material or preheated raw material into an outlet of a preheater (12) of a cement burning device (11) or an inlet of a dust collector (17) for removing dust from an exhaust gas of the preheater (12) according to SOx concentration in the preheater exhaust gas.

6. The method for desulfurizing cement kiln exhaust gas as claimed in claim 4 or 5, wherein an amount of said drawn cement raw material or preheated raw material is adjusted such that the molar ratio of (CaO of the drawn cement raw material or preheating raw material)/(SO₂ of the preheater exhaust gas) is 2 or more and 100 or less.

7. The method for desulfurizing cement kiln exhaust gas as claimed in claim 4, 5 or 6, wherein an amount of said drawn cement raw material or preheated raw material is adjusted according to the SOx concentration in the preheater exhaust gas.

8. An apparatus for producing a desulfurizing agent (1) comprising:
a drawing device (2) for drawing a cement raw material discharged from a lowermost cyclone (12D) of a preheater (12) of a cement burning device (11) or a preheated raw material discharged from a preheater cyclone of a cement burning device (11) having a calcium oxide (CaO) content of 40% by mass or more;
dividing means (3) for dividing said drawn cement raw material or preheated raw material into two;
a dissolving tank (4) for adding water to one of said divided cement raw materials or preheated raw materials to cool it and simultaneously make it into a slurry; and
a mixing dryer (5) for mixing said slurry with another of the divided cement raw materials or preheated raw materials to promote slaking of calcium oxide in the cement raw material or the preheated raw material in a steam atmosphere formed by the evaporation of water, and drying the slaked cement raw material or preheated raw material.

9. The apparatus for producing desulfurizing agent (1) as claimed in claim 8, wherein the outlet temperature of said mixing dryer (5) is set to be 105°C or more.

## Patentansprüche

1. Verfahren zur Herstellung eines Entschwefelungsmittels, umfassend folgende Schritte:
Abziehen eines Zementausgangsmaterials (R5), das aus einem untersten Zyklon (12D) eines Vorwärmers (12) einer Zementbrennvorrichtung (11) ausgetragen wird, oder eines vorgewärmten Ausgangsmaterials, das aus einem Vorwärmerzyklon einer Zementbrennvorrichtung (11) ausgetragen wird, mit einem Calciumoxidgehalt (CaO-Gehalt) von 40 Gewichts-% oder mehr;
Aufteilen des abgezogenen Zementausgangsmaterials (R7) oder vorgewärmten Ausgangsmaterials auf zwei Teile;
Zugeben von Wasser (W) zu einem (R8) von dem aufgeteilten Zementausgangsmaterial oder vorgewärmten Ausgangsmaterial, um es abzukühlen und gleichzeitig eine Aufschlämmung (S) daraus herzustellen, und
Mischen der Aufschlämmung (S) mit einem anderen (R9) von dem aufgeteilten Zementausgangsmaterial oder vorgewärmten Ausgangsmaterial, um das Löschen von Calciumoxid in dem Zementausgangsmaterial oder dem vorgewärmten Ausgangsmaterial in einer Dampfatmosphäre zu begünstigen, die durch Verdampfen von Wasser entsteht, und Trocknen des gelöschten Zementausgangsmaterials oder vorgewärmten Ausgangsmaterials.

2. Verfahren zur Herstellung des Entschwefelungsmittels nach Anspruch 1, wobei der Wassergehalt der Aufschlämmung auf 35 Gewichts-% oder weniger eingestellt wird.

3. Verfahren zur Herstellung des Entschwefelungsmittels nach Anspruch 1 oder 2, wobei der Wassergehalt des getrockneten Zementausgangsmaterials oder vorgewärmten Ausgangsmaterials auf 10 Gewichts-% oder weniger eingestellt wird.

4. Verfahren zum Entschwefeln von Zementofenabgas, das den Schritt zum gleichzeitigen Zuführen des Dampfs und des gelöschten Zementausgangsmaterials oder vorgewärmten Ausgangsmaterials, das mit dem Verfahren zur Herstellung von Entschwefelungsmittel nach Anspruch 1, 2 oder 3 erhalten wird, in eine Auslassöffnung eines Vorwärmers (12) einer Zementbrennvorrichtung (11) oder eine Einlassöffnung eines Staubabscheiders (17) zum Entfernen von Staub aus einem Abgas des Vorwärmers (12) umfasst.

5. Verfahren zum Entschwefeln von Zementofenabgas, das die Schritte zum Lagern des gelöschten Zementausgangsmaterials oder vorgewärmten Ausgangsmaterials, das mit dem Verfahren zur Herstellung von Entschwefelungsmittel nach Anspruch 1, 2 oder 3 erhalten wird, sowie zum mengenmäßigen Zuführen des gelöschten Zementausgangsmaterials oder vorgewärmten Ausgangsmaterials in eine Auslassöffnung eines Vorwärmers (12) einer Zementbrennvorrichtung (11) oder eine Einlassöffnung eines Staubabscheiders (17) zum Entfernen von Staub aus einem Abgas des Vorwärmers (12) entsprechend der SOx-Konzentration in dem Vorwärmerabgas umfasst.

6. Verfahren zum Entschwefeln von Zementofenabgas nach Anspruch 4 oder 5, wobei eine Menge des abgezogenen Zementausgangsmaterials oder vorgewärmten Ausgangsmaterials so eingestellt wird, dass das Molverhältnis von (CaO des abgezogenen Zementausgangsmaterials oder vorgewärmten Ausgangsmaterials)/(SO₂ im Vorwärmerabgas) 2 oder mehr und 100 oder weniger beträgt.

7. Verfahren zum Entschwefeln von Zementofenabgas nach Anspruch 4, 5 oder 6, wobei eine Menge des abgezogenen Zementausgangsmaterials oder vorgewärmten Ausgangsmaterials entsprechend der SOx-Konzentration in dem Vorwärmerabgas eingestellt wird.

8. Vorrichtung zur Herstellung eines Entschwefelungsmittels (1), umfassend:
eine Abziehvorrichtung (2) zum Abziehen eines Zementausgangsmaterials, das aus einem untersten Zyklon (12D) eines Vorwärmers (12) einer Zementbrennvorrichtung (11) ausgetragen wird, oder eines vorgewärmten Ausgangsmaterials, das aus einem Vorwärmerzyklon einer Zementbrennvorrichtung (11) ausgetragen wird, mit einem Calciumoxidgehalt (CaO-Gehalt) von 40 Gewichts-% oder mehr;
Aufteilmittel (3) zum Aufteilen des abgezogenen Zementausgangsmaterials oder vorgewärmten Ausgangsmaterials auf zwei Teile;
einen Auflösebehälter (4) zum Zugeben von Wasser zu einem von dem aufgeteilten Zementausgangsmaterial oder vorgewärmten Ausgangsmaterial, um es abzukühlen und gleichzeitig eine Aufschlämmung daraus herzustellen; und
einen Mischtrockner (5) zum Mischen der Aufschlämmung mit einem anderen von dem aufgeteilten Zementausgangsmaterial oder vorgewärmten Ausgangsmaterial, um das Löschen von Calciumoxid in dem Zementausgangsmaterial oder dem vorgewärmten Ausgangsmaterial in einer Dampfatmosphäre zu begünstigen, die durch Verdampfen von Wasser entsteht, und Trocknen des gelöschten Zementausgangsmaterials oder vorgewärmten Ausgangsmaterials.

9. Vorrichtung zur Herstellung von Entschwefelungsmittel (1) nach Anspruch 8, wobei die Austrittstemperatur des Mischtrockners (5) auf 105 °C oder mehr eingestellt ist.

## Revendications

1. Procédé de production d'un agent de désulfuration comprenant les étapes consistant à :
extraire une matière première à base de ciment (R5) déchargée d'un cyclone situé au plus bas (12D) d'un préchauffeur (12) d'un dispositif de brûlage de ciment (11) ou une matière première préchauffée déchargée d'un cyclone de préchauffeur d'un dispositif de brûlage de ciment (11) présentant une teneur en oxyde de calcium (CaO) de 40 % en masse ou plus ;
diviser ladite matière première à base de ciment extraite (R7) ou ladite matière première préchauffée en deux ;
ajouter de l'eau (W) à une (R8) parmi ladite matière première à base de ciment divisée ou ladite matière première préchauffée pour la refroidir et simultanément la transformer en une boue (S) ; et
mélanger ladite boue (S) avec un autre( R9) parmi la matière première à base de ciment divisée ou la matière première préchauffée afin de promouvoir l'extinction d'oxyde de calcium dans la matière première à base de ciment ou la matière première préchauffée dans une atmosphère à vapeur formée par l'évaporation de l'eau, et sécher la matière première à base de ciment éteinte ou la matière première préchauffée.

2. Procédé de production de l'agent de désulfuration selon la revendication 1, dans lequel la teneur en eau de ladite boue est ajustée à 35 % en masse ou moins.

3. Procédé de production de l'agent de désulfuration selon la revendication 1 ou 2, dans lequel la teneur en eau de ladite matière première à base de ciment séchée ou ladite matière première préchauffée est ajustée à 10 % en masse ou moins.

4. Procédé de désulfuration d'un gaz d'échappement de four à ciment comprenant l'étape consistant à alimenter simultanément ladite vapeur et la matière première à base de ciment éteinte ou la matière première préchauffée par le procédé de production d'un agent de désulfuration selon la revendication 1, 2 ou 3 dans une sortie d'un préchauffeur (12) d'un dispositif de brûlage de ciment (11) ou une entrée d'un collecteur de poussière (17) pour enlever la poussière d'un gaz d'échappement du préchauffeur (12).

5. Procédé de désulfuration d'un gaz d'échappement d'un four à ciment comprenant les étapes consistant à stocker ladite matière première à base de ciment éteinte ou ladite matière première préchauffée obtenue par le procédé de production d'un agent de désulfuration selon la revendication 1, 2 ou 3, et à alimenter quantitativement la matière première à base de ciment éteinte ou la matière première préchauffée dans une sortie d'un préchauffeur (12) d'un dispositif de brûlage de ciment (11) ou une entrée d'un collecteur de poussière (17) pour éliminer la poussière d'un gaz d'échappement du préchauffeur (12) selon la concentration de SOx dans le gaz d'échappement du préchauffeur.

6. Procédé de désulfuration d'un gaz d'échappement d'un four à ciment selon la revendication 4 ou 5, dans lequel une quantité de ladite matière première à base de ciment extraite ou de ladite matière première préchauffée est ajustée de sorte que le rapport molaire de (CaO de la matière première à base de ciment extraite ou de la matière première préchauffée)/(SO₂ du gaz d'échappement du préchauffeur) est de 2 ou plus et de 100 ou moins.

7. Procédé de désulfuration d'un gaz d'échappement d'un four à ciment selon la revendication 4, 5 ou 6, dans lequel une quantité de ladite matière première à base de ciment extraite ou de ladite matière première préchauffée est ajustée selon la concentration de SOx dans le gaz d'échappement du préchauffeur.

8. Appareil de production d'un agent de désulfuration (1) comprenant :
un dispositif d'extraction (2) pour extraire une matière première à base de ciment déchargée d'un cyclone situé au plus bas (12D) d'un préchauffeur (12) d'un dispositif de brûlage de ciment (11) ou une matière première préchauffée déchargée d'un cyclone de préchauffeur d'un dispositif de brûlage de ciment (11) présentant une teneur en oxyde de calcium (CaO) de 40 % en masse ou plus ;
des moyens de division (3) pour diviser ladite matière première à base de ciment extraite ou ladite matière première préchauffée en deux ;
un réservoir de dissolution (4) pour ajouter de l'eau à l'une de ladite matière première à base de ciment divisée ou de ladite matière première préchauffée pour la refroidir et simultanément la transformer en une boue ; et
un sécheur à mélange (5) pour mélanger ladite boue avec un autre parmi la matière première à base de ciment divisée ou la matière première préchauffée afin de promouvoir l'extinction d'oxyde de calcium dans la matière première à base de ciment ou la matière première préchauffée dans une atmosphère de vapeur formée par l'évaporation de l'eau, et sécher la matière première à base de ciment éteinte ou la matière première préchauffée.

9. Appareil de production d'un agent de désulfuration (1) selon la revendication 8, dans lequel la température de sortie dudit sécheur à mélange (5) est réglée pour être de 105 °C ou plus.
